Europäisches Patentamt

European Patent Office

Office européen des brevets

(11) Publication number: **0 095 535**
**B1**

(12) **EUROPEAN PATENT SPECIFICATION**

(45) Date of publication of patent specification: **20.08.86**

(21) Application number: **82302814.7**

(22) Date of filing: **01.06.82**

(51) Int. Cl.⁴: **G 01 F 9/00**

(54) **Apparatus for measuring fuel consumption of a liquid-fuel burning engine.**

(43) Date of publication of application:
**07.12.83 Bulletin 83/49**

(45) Publication of the grant of the patent:
**20.08.86 Bulletin 86/34**

(84) Designated Contracting States:
**AT BE CH DE FR GB IT LI LU NL SE**

(56) References cited:
**AT-B- 224 930
DE-A-1 573 013
DE-B-1 295 219
GB-A-1 411 171
US-A-4 013 194**

(73) Proprietor: **PLINT AND PARTNERS LIMITED
Fishponds Road
Wokingham RG11 2QG Berkshire (GB)**

(72) Inventor: **Plint, Michael Alexander
8 Watermans Way
Wargrave Berkshire (GB)**

(74) Representative: **Sawers, Lawrence Peter et al
PAGE, WHITE & FARRER 5 Plough Place New
Fetter Lane
London EC4A 1HY (GB)**

Courier Press, Leamington Spa, England.

## Description

This invention relates to apparatus for measuring the fuel consumption of a liquid-fuel burning engine.

In our British Patent Specification No. 1,411,171, we have described and claimed an apparatus for measuring the fuel consumption of such an engine in volumetric terms, comprising a measuring vessel for containing a measured volume of fuel and photoelectric devices for sensing predetermined levels of the fuel as it is withdrawn from the vessel and consumed by the engine. There is, however, a demand for measurement of fuel consumption in gravimetric terms. Various kinds of apparatus for measuring gravimetric fuel consumption are available, but they generally involve the weighing of a vessel from which fuel is withdrawn as it is consumed, and this arrangement is found to have a number of disadvantages.

Austrian Patent Specification No. 224,930 describes an apparatus for measuring consumption of a liquid, e.g. a fuel, comprising a balance beam which carries on one arm a container for a supply of liquid fuel and on the other arm two counterweights, one corresponding to the weight of the container and one (which can be de-coupled from the beam) to the weight of fuel to be supplied for a particular measurement. As fuel is drawn from the container, the balance beam moves into an equilibrium position when the weight of fuel in the container is equal to that of the latter counterweight, whereupon electrical contacts start the measurement operation. A slight further movement of the balance beam brings the counterweight corresponding to the weight of fuel into contact with an abutment which supports this counterweight and de-couples it from the balance beam, so that the balance beam remains in this position until the prescribed weight of fuel has been consumed, whereupon further movement of the beam causes further electrical contacts to conclude the measurement operation. In this case, direct measurement is made of the change in the weight of fuel in the container.

U.S. Patent Specification No. 4,013,194 describes an apparatus for measuring the gravimetric fuel consumption of a liquid-fuel burning engine which eliminates the need to weigh a container, comprising a vessel which is connectable with a source of liquid fuel for delivery of fuel to the vessel and which is also connectable at its bottom with the fuel intake of an engine, wherein a body is suspended in the vessel so as to be partially but not wholly immersed when the fuel is present in the vessel, and the cross-sectional areas of the vessel and body in corresponding horizontal planes throughout the operative vertical range of fuel levels in the vessel bear a precise and known relationship to one another, the body being suspended from a measuring device which measures the weight of fuel withdrawn from the vessel on consumption by the engine in terms of the change in the upward thrust on the body which arises from the reduction in its immersed volume.

The apparatus thus makes use of Archimedes' principle, that the loss of weight of a body immersed in a liquid is equal to the weight of the liquid displaced by the body.

This known apparatus works well in a static environment but not in circumstances where it is subject to vertical accelerations, such as on board ship in anything other than a perfectly calm sea. Such vertical accelerations give rise to parasitic forces on the suspended body which introduce large errors. An object of the present invention is to overcome this problem.

According to the present invention, an apparatus for measuring the gravimetric fuel consumption of a liquid-fuel burning engine, comprising a vessel which is connectable with a source of liquid fuel for delivery of fuel to the vessel and which is also connectable at its bottom with the fuel intake of an engine, and a body mounted in the vessel so as to be capable of at least a limited vertical movement therein, the cross-sectional areas of the vessel and body in corresponding horizontal planes throughout the operative vertical range of fuel levels in the vessel bearing a precise and known relationship to one another, is characterised in that the body is provided with an upward extension loosely carrying a load weight and the assembly of body and load weight is adapted to float in the fuel, an abutment is provided to support the load weight when the floating body falls below a given level as fuel is drawn from the vessel by the engine, and means are provided to generate a first signal when the body falls to said given level and to generate a second signal when the body falls below said level.

With this apparatus, the two signals are generated, firstly, when the assembly of body and load weight is floating in equilibrium in the fuel and, secondly, when the body alone is floating in equilibrium at substantially the same level. When a body is floating in equilibrium it is immune to disturbance from vertical accelerations affecting the surrounding liquid because the increase or decrease in apparent weight of the body is exactly equalled by the increase or decrease in apparent density of the surrounding liquid, so the errors experienced with the prior apparatus can be avoided. The interval between the two signals corresponds to the consumption of a known weight of fuel, since the level of the fuel in the vessel must have fallen sufficiently to reduce the weight of fuel displaced by the body by an amount equal to the weight of the load weight. Knowing the relationship between the cross-sectional areas of the body and vessel, the reduction in the weight of fuel displaced can be related to the weight of fuel withdrawn from the vessel, i.e. the weight consumed.

In a typical embodiment, both the vessel and body are cylindrical and the horizontal cross-sectional area of the vessel is exactly twice that of the body, in which case the weight of fuel withdrawn from the vessel will equal the weight of the load weight. If the cross-sectional area of the vessel were, for example, three times that of the body, the weight of fuel withdrawn from the vessel would equal twice the weight of the load weight.

Preferably the means for generating the two signals are arranged in such a manner that no more than a minimal downward movement of the body takes place between the generation of the two signals as the fuel is withdrawn from the vessel. In this case, the ratio between the weight of the load weight and the weight of fuel withdrawn is determined solely by the relative cross-sectional areas of the vessel and body as described above. It is, however, possible to introduce a correction to compensate for any error in the weight of fuel withdrawn which might arise from downward movement of the body. The preferred means for generating the signals comprise members carried by the upward extension and co-operating with photocells.

The apparatus may further comprise means for measuring the time of operation of the engine during a test, e.g. in the form of a digital clock, so that the time taken to consume a given weight of fuel can be observed.

The apparatus may further comprise means for measuring the number of revolutions of the engine during a test, so as to enable the specific fuel consumption to be calculated, and it may advantageously also comprise means for measuring the average dynamometer torque exerted by the engine during a test, in which case a wide range of performance figures of the engine can be calculated from the measured values.

In some cases it is difficult to make the body sufficiently buoyant to float in equilibrium when the fuel level is near the bottom of the vessel. To overcome this difficulty, the upward extension may be connected to a lever of the first order carrying a balance weight which partly counterbalances the weight of the body.

For use with large marine engines, where the fuel consumption is heavy and the appropriate metered weight of fuel can be large (e.g. a weight corresponding to a fuel mass of 40 Kg), it is still possible to use a vessel of relatively small size, by putting it in communication with one or more auxiliary vessels to provide an increased effective ratio between the total cross-sectional area of the vessels and the cross-sectional area of the body.

Such large marine engines, in particular, often use heavy residual fuel oils which have to be heated to e.g. 130°C in order to reduce their viscosity sufficiently to make them manageable. For this purpose, heating elements in the form of electrical resistance heating members and heat insulating members may be provided on the outside of the vessel or vessels.

A specific embodiment of the invention will now be described by way of example and with reference to the accompanying drawings, in which:—

Figure 1 is a diagrammatic elevation, partly in section, of an apparatus according to the invention for measuring the gravimetric fuel consumption of a large marine engine,

Figure 2 is a vertical sectional view, to a larger scale, of the upper part of the apparatus of Figure 1, omitting the connection to the lever and balance weight for clarity,

Figure 3 is a plan view of the part of the apparatus shown in Figure 2,

Figure 4 is an elevation of the uppermost part of the apparatus of Figure 1, and

Figure 5 is a similar view, taken at right angles to Figures 1 and 4, illustrating the lever and balance weight.

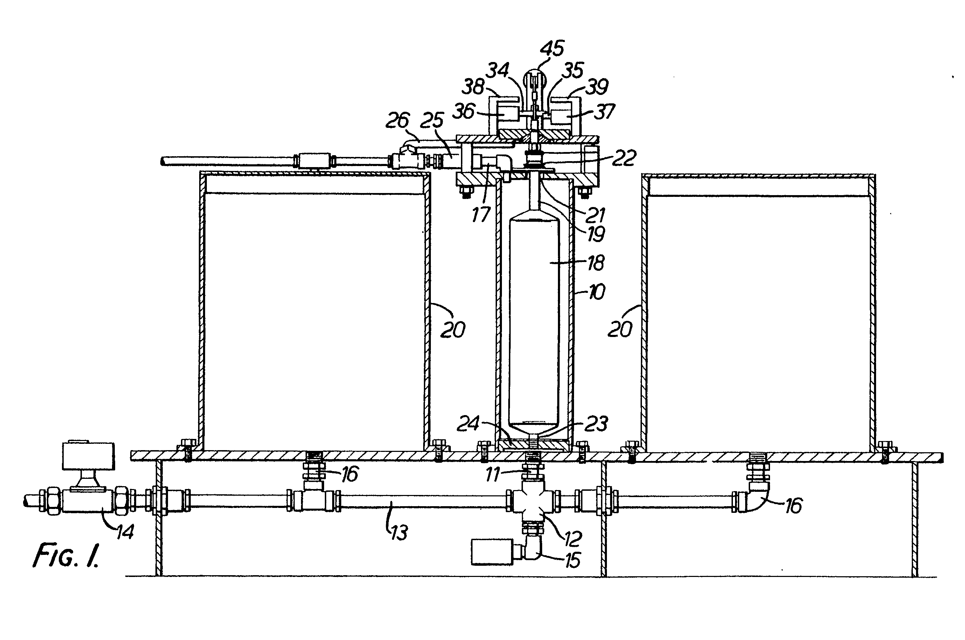

As shown in Figure 1, the apparatus comprises a vertical cylindrical vessel 10 whose bottom can be connected through a pipe 11, junction 12, pipe 13 and stopcock 14 to a source (not shown) of liquid fuel, e.g. diesel oil.

The bottom of vessel 10 can also be connected through pipe 11, junction 12 and pipe 15 with the fuel intake of a liquid-fuel burning engine (not shown) whose fuel consumption is to be measured. Further pipes 16 are provided to put the vessel 10 in communication with a pair of auxiliary cylindrical vessels 20 of larger diameter than the vessel 10, one on each side thereof. The top of the vessel 10 is provided with an overflow pipe 17 containing a spring-loaded pressure relief valve 25 and opening to the atmosphere, and with a vent pipe 26 which by-passes the relief valve 25 and which terminates, in the vessel 10, in a floating ball valve (not shown) which is normally open but can seal against an upper seating to prevent escape of fuel from the vessel if the fuel level rises too high. The space above the fuel in the vessel 10 is thus normally in communication with the atmosphere through vent pipe 26, but if the vessel is overfilled the ball valve closes and the relief valve 25 prevents loss of fuel unless the relief pressure is exceeded. The auxiliary vessels 20 are vented in a similar manner.

A cylindrical body 18 is mounted axially within the vessel 10, and carries an upward extension or stem 19 of reduced diameter. The stem 19 passes out of the vessel 10 through an aperture 21 in the top of the vessel and a bellows 22, e.g. of rubber, which closes the aperture 21 while offering no resistance to axial movement of stem 19. The bottom of the body 18 carries a further stem 23 of reduced diameter which is guided in a friction-free manner within a cylindrical bore in a crossmember 24 at the bottom of the vessel 10, so as to locate the body 18 laterally.

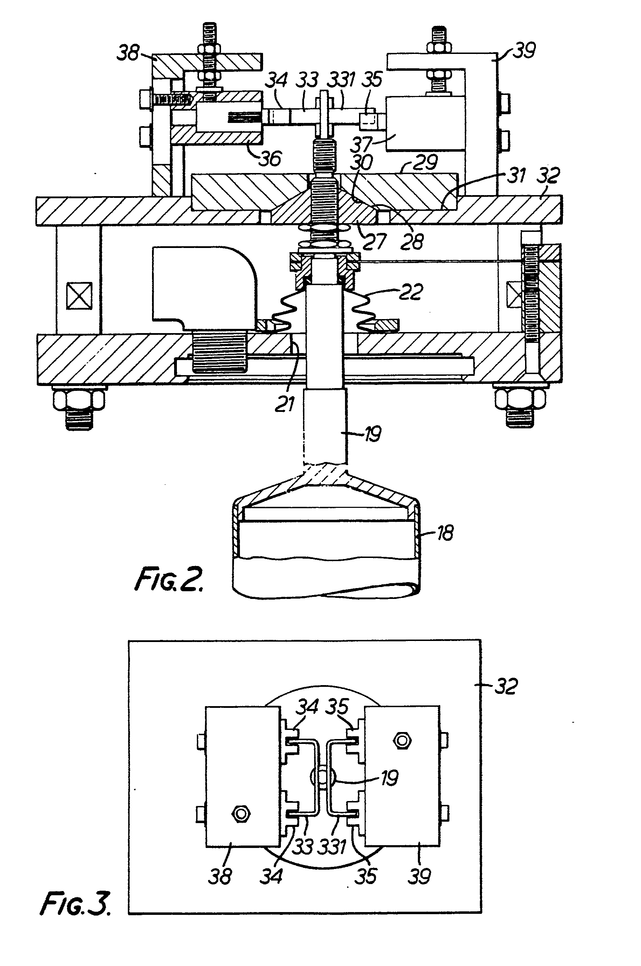

As shown in Figure 2, the upper part of the stem 19 carries a collar 27 screw threaded thereon and having a conical upper surface 28. A load weight 29 having a complementary conical portion 30 on its under surface fits loosely over the collar 27. When the body 18 falls below the level shown in Figures 1 and 2, the load weight 29 is supported in a corresponding recess 31 in a support plate 32 forming part of the fixed structure of the apparatus. When the body 18 floats above the level shown, it lifts the load weight 29 off the support plate 32.

The uppermost portion of the stem 19 carries a pair of U shaped strips 33, 331, whose ends form flags for co-operation with two pairs of photocells 34, 35 on respective sides of the apparatus. The photocells 34, 35 are supported on respective blocks 36, 37 which are adjustable vertically on supports 38, 39 forming parts of the fixed structure. As shown, the photocells 34 are adjusted to be of the order of 1 mm above the photocells 35.

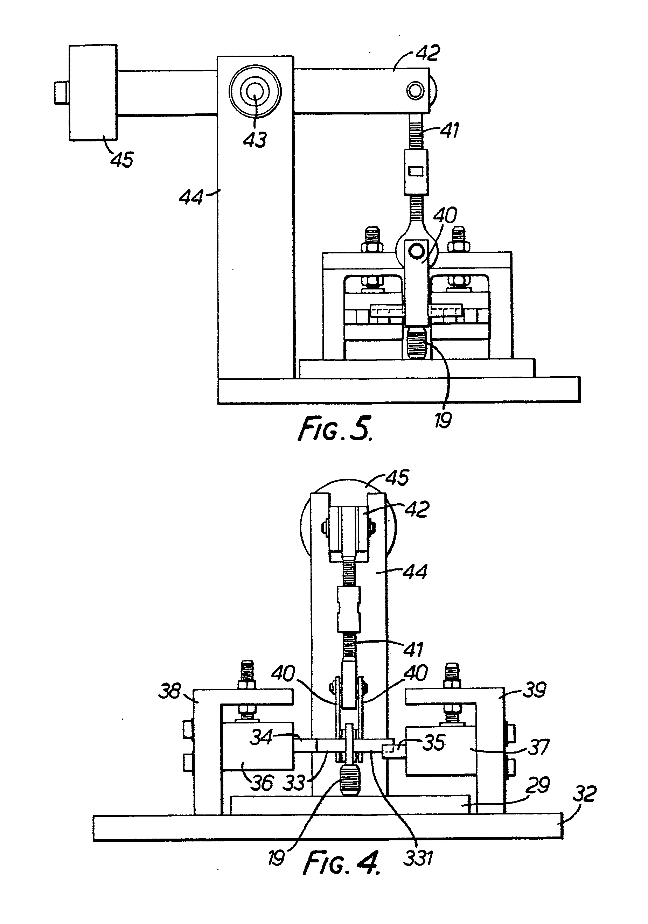

As shown in Figures 1, 4 and 5, the uppermost portion of the stem 19 is also connected by pivotal links 40 and an adjustable rod 41 to a first order lever 42 pivoted at 43 in a pillar 44 which also forms part of the fixed structure. The further end of the lever 42 carries a balance weight 45 which partly counter-balances the weight of the assembly of the body 18 and load weight 29.

In operation, to carry out a measurement of the fuel consumption of an engine whose fuel intake is connectable to pipe 15, the vessel 10 is filled through stopcock 14 with fuel to a level at which the body 18, carrying the load weight 29 through the collar 27, floats in equilibrium with the load weight slightly above the support plate 32. In this position, the strips 33, 331 are both above their respective photocells 34, 35.

The engine is run with its fuel intake connected to pipe 15, thus withdrawing its fuel from the vessel 10. As the fuel is withdrawn, the body 18 floats downwards until the load weight 29 comes to rest on the recess 31 of the support plate 32, in the position shown in the drawings. At this position, the strip 33 causes the photocells 34 to generate a first signal. This first signal is used to start operation of measuring apparatus (not shown) such as a clock for measuring the time of operation on test. Once relieved of the weight of the load weight 29, the body 18 remains at the same level as the fuel level in the vessel 10 falls, until the fuel level has fallen sufficiently for the body 18 to float once more in equilibrium and thus to commence floating downwards once more. At this point, the strip 331 causes the photocells 35 to generate a second signal, which can be used to stop the measuring apparatus, *e.g.* the clock mentioned above.

The weight of fuel withdrawn from the vessels 10 and 20 during the measured interval is then known, since the reduction in the fuel level between the two signals must have been sufficient to reduce the weight of fuel displaced by the body 18 by an amount equal to the weight of the load weight 29. Since the cross-sectional areas of the body 18 and vessels 10 and 20 are known, the reduction in the weight of fuel displaced can be related precisely to the weight of fuel withdrawn, *i.e.* consumed by the engine. If the vessels 20 were absent, and assuming that the cross-sectional area of the vessel 10 is exactly twice that of the body 18, the weight of fuel consumed would be exactly equal to the weight of the load weight 29. In the case illustrated, assuming that the total cross-sectional area of the vessels 10 and 20 is 45 times that of the vessel 10, the weight of fuel consumed will be 44 times the weight of the load weight 29. Where the measuring apparatus actuated by the signals is a clock or other time recording apparatus, the gravimetric fuel consumption per unit time can thus be measured. Means of known type for measuring the number of revolutions of the engine on test may also be provided, to enable the specific consumption to be measured. Finally the engine may be connected to a dynamometer and means of known type may be provided for measuring the average dynamometer torque during test, to enable a wide range of engine performance figures to be calculated. As mentioned above, the vessels 10 and 20 may be provided with heating and insulating means, *e.g.* resistance heating wires in insulating tape, for keeping the fuel at an elevated temperature at which its viscosity is suitably lowered.

**Claims**

1. An apparatus for measuring the gravimetric fuel consumption of a liquid-fuel burning engine, comprising a vessel (10) which is connectable with a source of liquid fuel for delivery of fuel to the vessel and which is also connectable at its bottom with the fuel intake of an engine, and a body (18) mounted in the vessel (10) so as to be capable of at least a limited vertical movement therein, the cross-sectional areas of the vessel and body in corresponding horizontal planes throughout the operative vertical range of fuel levels in the vessel bearing a precise and known relationship to one another, characterised in that the body (18) is provided with an upward extension (19) loosely carrying a load weight (29) and the assembly of body (18) and load weight (29) is adapted to float in the fuel, an abutment (32) is provided to support the load weight (29) when the floating body (18) falls below a given level as fuel is drawn from the vessel (10) by the engine, and there are provided means (33, 34) to generate a first signal when the body falls to said given level and means (331, 35) to generate a second signal when the body falls below said level.

2. An apparatus according to claim 1, characterised in that both the vessel (10) and the body (18) are cylindrical and the horizontal cross-sectional area of the vessel is exactly twice that of the body.

3. An apparatus according to claim 1 or 2, characterised in that the means (33, 34 and 331, 35) for generating the two signals are arranged in such a manner that no more than a minimal downward movement of the body (18) takes place between the generation of the two signals as the fuel is withdrawn from the vessel (10).

4. Apparatus according to claim 3, characterised in that the means for generating the signals comprise members (33, 331) carried by the upward extension (19) and cooperating with photocells (34, 35).

5. An apparatus according to any one of the preceding claims, characterised in that it further comprises means for measuring the time of operation of the engine during a test.

6. An apparatus according to any one of the preceding claims, characterised in that it further comprises means for measuring the number of revolutions of the engine during a test.

7. An apparatus according to any one of the preceding claims, characterised in that it further comprises means for measuring the average dynamometer torque exerted by the engine during a test.

8. An apparatus according to any one of the preceding claims, characterised in that the upward extension (19) is connected to a lever of the first order (42) carrying a balance weight (45) which partly counterbalances the weight of the body (18).

9. An apparatus according to any one of the preceding claims, characterised in that the vessel (10) is in communication with one or more auxiliary vessels (20) to provide an increased effective ratio between the total cross-sectional area of the vessels and the cross-sectional area of the body (18).

10. An apparatus according to any one of the preceding claims, characterised in that heating elements in the form of electrical resistance heating members and heat insulating members are provided on the outside of the vessel or vessels.

**Patentansprüche**

1. Apparatur zur gravimetrischen Messung des Brennstoffverbrauchs eines mit flüssigen Brennstoff betriebenen Motors, bestehend aus einem Gefäss (10), das mit einer Quelle flüssigen Brennstoffs zur Förderung von Brennstoff in das Gefäss und ferner an seinem Boden mit dem Brennstoffeinlass eines Motors verbindbar ist, und einem in dem Gefäss (10) so angebrachten Körper (18), dass dieser darin zumindest begrenzte senkrechte Bewegungen ausführen kann, wobei die Querschnittsflächen des Gefässes und des Körpers in entsprechenden horizontalen Ebenen über den gesamten senkrechten Betriebsbereich der Brennstoffüllstände im Gefäss in einer genauen und bekannten gegenseitigen Beziehung stehen, dadurch gekennzeichnet, dass der Körner (18) mit einer Verlängerung (19) nach oben versehen ist, die lose ein Lastgewicht (29) trägt, und die Baugruppe aus Körper (18) und Lastgewicht (29) so ausgebildet ist, dass sie im Brennstoff schwimmt, eine Schulter (32) zur Unterstützung des Lastgewichts (29), wenn der Schwimmkörper (18) beim Ansaugen von Brennstoff aus dem Gefäss (10) durch den Motor unter eine vorgegebene Höhe fällt, sowie Mittel (33, 34) zur Erzeugung eines ersten Signals, wenn der Körper auf besagte vorgegebene Höhe fällt, und Mittel (331, 35) zur Erzeugung eines zweiten Signals, wenn der Körper unter besagte Höhe fällt, vorgesehen sind.

2. Apparatur nach Anspruch 1, dadurch gekennzeichnet, dass sowohl das Gefäss (10) als auch der Körper (18) zylinderförmig sind und die horizontale Querschnittsfläche des Gefässes genau zweimal so gross wie diejenige des Körpers ist.

3. Apparatur nach Anspruch 1 oder 2, dadurch gekennzeichnet, dass die Mittel (33, 34 und 331, 35) zur Erzeugung der beiden Signale so angeordnet sind, dass zwischen der Erzeugung der beiden Signale beim Ansaugen von Brennstoff aus dem Gefäss (10) nur eine äusserst kleine Abwärtsbewegung des Körpers (18) stattfindet.

4. Apparatur nach Anspruch 3, dadurch gekennzeichnet, dass die Mittel zur Erzeugung der Signale aus Gliedern bestehen (33, 331), die von der Verlängerung (19) nach ob getragen werden und mit Photozellen (34, 35) zusammenarbeiten.

5. Apparatur nach einem der vorhergehenden Ansprüche, dadurch gekennzeichnet, dass sie ferner Mittel zur Messung der Laufzeit des Motors während eines Tests enthält.

6. Apparatur nach einem der vorhergehenden Ansprüche, dadurch gekennzeichnet, dass sie ferner Mittel zur Messung der Drehzahl des Motors während eines Tests enthält.

7. Apparatur nach einem der vorhergehenden Ansprüche, dadurch gekennzeichnet, dass sie ferner Mittel zur Messung des durchschnittlichen, vom Motor ausgeübten Dynamometerdrehmoments während eines Tests enthält.

8. Apparatur nach einem der vorhergehenden Ansprüche, dadurch gekennzeichnet, dass die Verlängerung (19) nach oben mit einem Hebel erster Ordnung (42) verbunden ist, der ein Gegengewicht (45) zum teilweisen Ausgleich des Gewichts des Körpers (18) trägt.

9. Apparatur nach einem der vorhergehenden Ansprüche, dadurch gekennzeichnet, dass das Gefäss (10) mit einem oder mehreren Hilfsgefässen (20) in Verbindung steht, um ein erhöhtes Wirkverhältnis zwischen der Gesamtquerschnittsfläche der Gefässe und der Querschnittsfläche des Körpers (18) zu liefern.

10. Apparatur nach einem der vorhergehenden Ansprüche, dadurch gekennzeichnet, dass auf der Aussenseite des Gefässes bzw. der Gefässe Heizelemente in Form elektrischer Widerstandsheizglieder und wärmeisolierende Glieder vorgesehen sind.

**Revendications**

1. Appareil pour mesurer la consommation de carburant gravimétrique d'un moteur à combustion à carburant liquide, comprenant un réservoir (10) qui peut être raccordé à une source de carburant liquide destinée à fournir du carburant au réservoir et qui peut aussi être raccordé, à sa partie inférieure, à l'admission de carburant d'un moteur, et un corps (18) monté dans le réservoir (10) de manière à être à même d'y effectuer au moins un déplacement vertical limité, les sections transversales du réservoir et du corps dans des plans horizontaux correspondants et sur la totalité de la gamme verticale de service de niveaux de carburant dans le réservoir se trouvant dans une relation réciproque précise et connue, caractérisé en ce que le corps (18) et pourvu d'un prolongement vers le haut (19) portant sans serrage un contrepoids (29) et l'ensemble du corps (18) et du contrepoids (29) est à même de flotter dans le carburant, un arrêt (32) étant prévu pour supporter le contrepoids (29) lorsque le corps flottant (18) descend en dessous d'un niveau donné à mesure que du carburant est soutiré du réservoir (10) par le moteur, des moyens (33, 34) étant, en outre, prévus pour produire un premier signal lorsque le corps descend jusqu'au niveau donné et des moyens (331, 35) étant prévus pour produire un second signal lorsque le corps descend en dessous de ce niveau.

2. Appareil suivant la revendication 1, caractérisé en ce que le réservoir (10) et le corps (18) sont cylindriques et la section transversale horizontale du réservoir vaut exactement le double de celle du corps.

3. Appareil suivant la revendication 1 ou 2, caractérisé en ce que les moyens (33, 34 et 331, 35) destinés à produire les deux signaux sont agencés d'une manière telle qu'un déplacement vers le bas minimum du corps (18) suffise pour provoquer la production des deux signaux à mesure que le carburant est soutiré du réservoir (10).

4. Appareil suivant la revendication 3, caractérisé en ce que les moyens destinés à produire les signaux comprennent des éléments (33, 331) supportés par le prolongement vers le haut (19) et coopérant avec des cellules photoélectriques (34, 35).

5. Appareil suivant l'une quelconque des revendications précédentes, caractérisé en ce qu'il comprend, en outre, un moyen pour mesurer la durée de fonctionnement du moteur pendant un essai.

6. Appareil suivant l'un quelconque des revendications précédentes, caractérisé en ce qu'il comprend, en outre, un moyen pour mesurer le nombre de tours du moteur pendant un essai.

7. Appareil suivant l'une quelconque des revendications précédentes, caractérisé en ce qu'il comprend, en outre, un moyen pour mesurer le couple dynamométrique moyen exercé par le moteur pendant un essai.

8. Appareil suivant l'une quelconque des revendications précédentes, caractérisé en ce que le prolongement vers le haut (19) est relié à un levier du premier ordre (42) portant un contrepoids (45) qui contrebalance partiellement le poids du corps (18).

9. Appareil suivant l'une quelconque des revendications précédentes, caractérisé en ce que le réservoir (10) est en communication avec un ou plusieurs réservoirs auxiliaires (20) pour fournir un rapport efficace accru entre la section transversale des réservoirs et la section transversale du corps (18).

10. Appareil suivant l'une quelconque des revendications précédentes, caractérisé en ce que des éléments chauffants ayant la forme d'éléments chauffants à résistance électrique et d'éléments calorifuges sont prévus sur la surface externe du ou des réservoirs.

*FIG. I.*

FIG.2.

FIG.3.

FIG. 5.

FIG. 4.